Europäisches Patentamt

European Patent Office

Office européen des brevets

(19)

(11) **EP 1 343 001 A1**

(12) **EUROPEAN PATENT APPLICATION**

(43) Date of publication:
**10.09.2003 Bulletin 2003/37**

(51) Int Cl.7: **G01N 21/64**

(21) Application number: **02004899.7**

(22) Date of filing: **04.03.2002**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **Evotec OAI AG**<br>**22525 Hamburg (DE)**<br><br>(72) Inventors:<br> • **Eggeling, Christian, Dr.**<br>  **22761 Hamburg (DE)**<br> • **Kaupo, Palo, Dr.**<br>  **74001 Harjumaa (EE)** | • **Fay, Nicolas, Dr.**<br> **22391 Hamburg (DE)**<br>• **Hoffmann-Wecker, Maciej, Dr.**<br> **22083 Hamburg (DE)**<br>• **Ilouga, Pierre, Dr.**<br> **22529 Hamburg (DE)**<br><br>(74) Representative:<br>**Meyers, Hans-Wilhelm, Dr.Dipl.-Chem. et al<br>Patentanwälte<br>von Kreisler-Selting-Werner<br>Postfach 10 22 41<br>50462 Köln (DE)** |

(54) **A method for identifying the impacts of interfering effects on secondary light emission data**

(57)     The invention provides a method for identifying the impacts of interfering effects on secondary light emission data resulting from optical experiments on samples. In particular, a method is described for identifying the impacts of unwanted auto-fluorescence, fluorescence quenching, and deterioration of a fluorescent sample under study on the collected experimental data. The data are analyzed whether or not said data fulfill certain criteria with respect to a pre-selected value and / or function of at least one identification parameter, which pre-selected value and / or function of the identification parameter is indicative for said interfering effect.

Figure 5

**EP 1 343 001 A1**

**Description**

This invention relates to a method for identifying the impacts of interfering effects on secondary light emission data. More particularly, the invention relates to a method for identifying impacts of the effects of unwanted auto-fluorescence, of fluorescence quenching, and/or of general deterioration of the light signal on the measured data.

In the rapidly evolving field of nano-biotechnology, manipulation of particles and objects are important issues. Tools for manipulation are atomic force microscope, magnetic tweezers, photonic force microscope (optical tweezers), micro needles, electric fields and field cages, and levitated liquid droplets. To control these manipulation tools, secondary light emitted by the particle is often used as a feedback signal.

Apart from the manipulation of sample components, the characterization of samples plays an important role in chemistry, physics, biology, and medicine. Typical applications are chemical analysis in medicine, forensic science, material science, diagnostics, and biotechnology. Furthermore, in pre-clinical drug development, biological target molecules are examined in screening processes to identify compounds interacting with said target molecules. Very often ligand-receptor, substrate-enzyme, protein-protein, protein-DNA or protein-cell-membrane interactions are studied. Such studies are often conducted utilizing secondary light emission as a read-out. The information of emitted secondary light can e.g. be used to produce images of the sample under study. Presently, primarily fluorescence intensity is used in imaging. Further secondary light emission parameters such as fluorescence lifetime, anisotropy or polarization, or ratios of intensities from different wavelengths are also often used.

In the following, the word "light" will sometimes be used instead of "radiation". The word "light" shall not be constrained as being limited to visible radiation unless otherwise specified.

The excitation of a sample under study can e.g. take place by radiation as single-photon excitation, two-photon excitation or multi-photon excitation, or by chemical reactions. The light used for inducing a secondary light emission may be continuous or sinusoidally modulated, e.g. for phase modulation measurements, or it may be a series of light pulses. The scattering or emission of secondary light after excitation by primary light can be an elastic process, like Rayleigh-, Mie-, and Raman-scattering (e.g. Surface-Enhanced-Raman-Scattering (SERS) or Surface-Enhanced-Resonance-Raman-Scattering (SERRS)), or an inelastic process, e.g. luminescence such as phosphorescence or fluorescence. These processes are typically induced by directing electromagnetic radiation (e.g. appropriate laser light) as primary light onto the sample. Whereas elastic emission is a temporally prompt process, inelastic emission is generally delayed with respect to the excitation time. In case of luminescence, the probability of electronic deactivation and hence the inelastic emission of light is temporally exponentially distributed. The lifetime of the electronically excited state is defined as the time where the probability to be in the excited state has dropped to $1/e$.

The detection of secondary emitted light can e.g. be performed on an epi-illuminated confocal fluorescence microscope using avalanche photodiodes as described in detail previously [Kask, P., Palo, K., Fay, N., Brand, L., Mets, Ü., Ullman, D., Jungmann, J., Pschorr, J. and Gall, K. (2000) Two-Dimensional Fluorescence Intensity Distribution Analysis: Theory and Applications. *Biophys.J.,* **78**, 1703-1713]. Thereby, the excitation light can be in a stationary position, or be moved over and scanning the sample. Further possible set-ups are evanescent-excitation, Raman microscopes, near-field microscopes, scanning (e.g. near-field or confocal) microscopes using beam-scanners, table-scanners, and / or Nipkov-devices, as well as spectrometers using non-confocal excitation and detection. Detection might also be performed on the opposite side of the excitation. Also, the detector does not necessarily have to be an avalanche photodiode. Any sensitive detector such as photo-multipliers or CCD-cameras will do.

To be detected due to emitted secondary light, the particle of interest either has to have the ability to emit light by itself or has to be labeled by a secondary light emitting tag, e.g. a fluorescent dye, a luminescent nanoparticle (e.g. a seminconductor quantum dot), or a metal chelate. In general, the particles of interest are observed in a medium such as in a solution, on surfaces, on cells, or in matrices. In drug screening processes, typically the interaction between a biological target and a luminescent ligand in the presence of low molecular weight compounds is studied. The biological target is typically involved in the pathogenesis of a disease and the compounds are screened to find possible drug candidates. In one typical experimental set-up, the influence of the compounds on the binding reaction between ligand and target is studied utilizing secondary light emission as a read-out.

There are two main disadvantages when using secondary emitted light such as fluorescence to perform characterizations of biological and/or chemical samples.

(1) "Auto-fluorescence": Background light might occur due to additional secondary light emitting particles in the sample besides the particles of interest. These particles might be the medium itself, i.e. solvent or surface molecules, impurities, and/or the added compounds. In the field of fluorescence detection, this phenomenon is known as auto-fluorescence. The auto-fluorescence interferes the detected signal which does not solely consist of actual light from the particles of interest anymore. Since the interfering auto-fluorescence has its own characteristics, the read-out (such as intensity, anisotropy, brightness, or lifetime) will be deteriorated. Let us consider the following example for illustration purposes only:

- The particles of interest might emit light with intensity $I_1$ = 120 kHz, anisotropy $r_1$ = 0.15, brightness $q_1$ = 30 kHz, and lifetime $t_1$ = 3 ns.
- The unwanted auto-fluorescence might have an intensity $I_2$ = 80 kHz, anisotropy $r_2$ = 0.05, brightness $q_2$ = 2 kHz, and lifetime $t_2$ = 1 ns.
- Then the non-deteriorated read-out without interfering auto-fluorescence would be $I_{tot}$ = 120 kHz, anisotropy $r_{tot}$ = 0.15, brightness $q_{tot}$ = 30 kHz, and lifetime $t_{tot}$ = 3 ns.
- The deteriorated read-out with interfering auto-fluorescence could be approximated via the fraction of background light, $f_2 = I_2 / I_{tot}$ = 0.4 (with $I_{tot} = I_1 + I_2$), with $x_{tot} = X_1 \times (1-f_2) + X_2 \times f_2$ (with x = r, q, t); thus, $I_{tot}$ = 200 kHz, anisotropy $r_{tot}$ = 0.11, brightness $q_{tot}$ = 18.8 kHz, and lifetime $t_{tot}$ = 2.2 ns.

Samples with auto-fluorescence will therefore exhibit an increased light intensity. However, the scientist might not know that the secondary light contains spurious elements due to auto-fluorescence. The correct characterization of the particles of interest via the characteristics of the emitted light will be deteriorated and will fail.

(1) "Quenching": In the case of tagged particles, the added compounds might directly react with the secondary light emitting tag and not with the tagged particle itself. This reaction might lead to a change in the secondary light emission, mainly a decrease in light intensity. Possible reactions can be ground-state and excited-state complexes. In the field of fluorescence, this phenomenon is known as quenching. Thus, changes and characteristics in the secondary emitted light do not come from variations or properties of the tagged particle of interest anymore, but from the quenching reaction between compound and secondary light emitting tag. Again, let us consider an example for illustration purposes only:

- Fluorescently labeled peptides might emit light with intensity $I_1$ = 100 kHz, anisotropy $r_1$ = 0.08, brightness $q_1$ = 30 kHz, and lifetime $t_1$ = 3 ns. Upon binding to a protein, the characteristics of the emitted light might change to $I_2$ = 50 kHz, anisotropy $r_2$ = 0.20, brightness $q_2$ = 15 kHz, and lifetime $t_2$ = 1.5 ns
- The binding might be activated by certain compounds. Thus, an activating compound could directly be observed by the characteristics of the emitted light due to the changes caused by the binding event.
- However, imagine a non-activating compound which directly quenches the fluorescent tag. This compound might also induce changes in the emitted light, e.g. a decreased intensity and brightness, although no binding event occurred. From the characteristics of the read-out an alleged activation would be observed.

Samples with quenching compounds will exhibit a change in the emitted light, mainly a decreased light intensity. Again, the correct characterization of the tagged particles of interest via the characteristics of the emitted light will be deteriorated and will fail.

In addition to the above described cases of auto-fluorescence and quenching, a general deterioration of the signal might occur e.g. due to sample handling mistakes such as pipetting errors or due to bleaching effects of fluorescent dyes. A dye is bleached if the exciting light is causing an irreversible or reversible reaction. This reaction leads to a change in the light emission e.g. by a destruction of the dye. In the case of a destruction, the dye would irreversibly loose its ability to emit light.

In particular, in the field of high throughput drug screening, a deteriorated signal will have a severe impact on the further pre-clinical and clinical development. False positive compounds might be further optimized with high technical and financial efforts. False negative compounds might never become drugs because they have not been identified in the primary screening process. Of course, also in diagnostic and forensic applications interfering secondary light emission might have severe impacts on the data and therefore on the outcome of an experiment.

It is therefore an object of the present invention to improve the light emission read-out with respect to impacts of interfering effects on secondary light emission, in particular deterioration such as auto-fluorescence or quenching. This object is solved by the invention according to the independent claim 1. Advantageous embodiments of the invention are characterized in the dependent claims.

According to the present invention, a method is provided for identifying the impacts of interfering effects on secondary light emission data resulting from optical experiments on samples. The method comprises the steps of:

(i) providing data resulting from optical experiments on samples,
(ii) analyzing the data whether or not said data fulfill pre-selected criteria with respect to a pre-selected value and / or function of at least one identification parameter, which pre-selected value and / or function of the identification parameter is indicative for said effect, and
(iii) identifying those data which are influenced by said interfering effects.

The pre-selected value and / or function of at least one identification parameter is preferably a constant.

However, it can also be determined from a distribution of identification parameters obtained from a set of optical experiments.

In a preferred embodiment, the identification parameter is selected from the group consisting of a fluorescence intensity, a ratio of fluorescence intensities at selected wavelengths, a ratio of fluorescence intensities at different polarization directions, a fluorescence anisotropy, a fluorescence polarization, a fluorescence lifetime, a diffusion constant, a concentration of fluorophores, and a specific fluorescence brightness.

The most simple identification parameters are:

(a) The signal count rate, denoted intensity, I. Consequently, the experimental data can be checked whether they fulfill certain criteria with respect to a pre-selected intensity value and / or function.

(b) The anisotropy, r, or polarization, P. When employing two detectors which monitor different polarization directions of the emitted light, r and P can be calculated from the intensities with parallel, $I_p$, and perpendicular, $I_s$, polarization with respect to the polarization of the exciting light. Consequently, the data resulting from these optical experiments can be checked whether they fulfill certain criteria with respect to a pre-selected anisotropy or polarization value. Anisotropy and polarization are defined as follows:

$$r = (I_p - I_s) / (I_p + 2\, I_s)$$

$$P = (I_p - I_s) / (I_P + I_s)$$

(c) The ratio of intensities, f. When employing at least two detectors which monitor different wavelength ranges or different polarization directions of the emitted light, ratios or fractions of intensities detected on one or more detectors can be deduced. These can be checked whether they are in consistence with a pre-selected value and / or function of intensity ratios.

(d) The lifetime, t. The mean excitation-to-detection delay time, i.e. the lifetime of the excited state of the secondary light emitting particle can e.g. be measured using pulsed light excitation together with time-correlated-single-photon-counting (TCSPC) or using modulated light excitation in general. The lifetime can be determined by a fit to the excitation-to-detection delay time histogram and even enables to distinguish secondary light emitting particles with different lifetimes within a mixture and to quantify them via their fractional intensities; this can preferably be done by performing a multi-component fit to the excitation-to-detection delay time histogram. Again, a check of the experimental data with regard to a pre-selected lifetime value and / or function will be conducted.

More complex spectroscopic techniques have been developed which are based on the detection of single light emitting particles and which enable to resolve different light emitting particles within the same sample.

(a) The direct observation of signal bursts from single light emitting particles enables to qualitatively and quantitatively identify different light emitting particles in a mixture via their spectroscopic properties; e.g. such as realized in a dye mixture using the differing fluorescence properties: lifetime [Zander, C., Sauer, M., Drexhage, K.H., Ko, D.S., Schulz, A., Wolfrum, J., Brand, L., Eggeling, C. and Seidel, C.A.M. (1996) Detection and characterization of single molecules in aqueous solution. *Appl.Phys.B,* **63**, 517-523], lifetime and intensity [Fries, J.R., Brand, L., Eggeling, C., Köllner, M. and Seidel, C.A.M. (1998) Quantitative identification of different single-molecules by selective time-resolved confocal fluorescence spectroscopy. *J.Phys.Chem.A,* **102**, 6601-6613], and anisotropy [Schaffer, J., Volkmer, A., Eggeling, C., Subramaniam, V., Striker, G. and Seidel, C.A.M. (1999) Identification of single molecules in aqueous solution by time-resolved fluorescence anisotropy. *J.Phys.Chem.A,* **103**, 331-336]. Accordingly, a suitable identification parameter as well as its value being indicative for a certain effect is chosen. Thereafter, the experimental data are checked for fulfilling certain criteria with respect to said pre-selected value and / or function.

(b) FCS (fluorescence correlation spectroscopy) analyses the temporal characteristics of signal fluctuations from single light emitting particles. The calculated correlation function of these fluctuations decays with time constants that are characteristic of the molecular processes causing these signal changes, e.g. diffusion into and out of the detection volume and reaction kinetics. The amplitude of the decay is related to the molecular concentration while the inflection point of the correlation function represents the mean diffusion time, $t_{diff}$, of the fluorescing molecules through the detection volume, which is solely dependent on the diffusion coefficient. Hence, by a fit to the correlation function, FCS is able to resolve components of a sample with different diffusion coefficients due to their different molecular masses; in practice, preferably a multi-component fit to the correlation function is performed. Accordingly, when studying FCS data, a suitable identification parameter is the diffusion coefficient.

(c) FIDA (fluorescence intensity distribution analysis) relies on a collection of instantaneous values of the fluctuating intensity by building up a frequency histogram of the signal amplitudes throughout a measurement [Kask, P., Palo, K., Ullman, D. and Gall, K. (1999) Fluorescence-intensity distribution analysis and its application in biomolecular detection technology. *Proc. Natl. Acad. Sci. U.S.A.,* 96, 13756-13761]. The resulting distribution of signal intensities is then analyzed by a theory which relates specific fluorescence brightness q (intensity per molecule in kHz), and absolute concentration c (mean number of molecules in the detection volume) of the molecules under investigation. By performing a fit to the frequency histogram, FIDA distinguishes species of the sample according to their different values of specific molecular brightness q; in practice, preferably a multi-component fit is performed. Consequently, when studying data collected by FIDA experiments, a suitable identification parameter is the specific molecular brightness q.

(d) Further methods such as 2D-FIDA (two-dimensional fluorescence intensity distribution analysis), FIMDA (fluorescence intensity multiple distribution analysis), or FILDA (fluorescence intensity and lifetime distribution analysis) might be applied resulting in improved performance compared to the FIDA technique.

2D-FIDA typically makes use of a two-detector set-up monitoring either different polarization or emission bands of the signal. In addition to the FIDA performance, 2D-FIDA achieves additional molecular resolution by performing a multi-component fit to the two-dimensional frequency histogram of the concurrent signal amplitudes from both detectors and, thus, the concurrent determination of two specific brightness values of each detection channel, $q_1$ (channel1) and $q_2$(channel2), for each component [Kask, P., Palo, K., Fay, N., Brand, L., Mets, Ü., Ullman, D., Jungmann, J., Pschorr, J. and Gall, K. (2000) Two-Dimensional Fluorescence Intensity Distribution Analysis: Theory and Applications. *Biophys.J.,* **78**, 1703-1713]. By observing the molecular resolved anisotropy, simple and more complex binding events and enzymatic reactions may be followed. Alternatively, such events may be followed using light emitting particle with different emission bands and combining this with either two-color excitation by different lasers or energy-transfer interaction. Thus, the use of a second detector can improve the power of FIDA to distinguish between molecular components and is, therefore, increasingly applied in high-performance drug discovery. When analyzing data collected by 2D-FIDA experiments, one will preferably choose two identification parameters: (i) a molecular brightness, $q_1$, at a first wavelength and / or a molecular brightness, $q_2$, at a second wavelength; alternatively (ii) a molecular brightness, $q_1$, at a first polarization and / or a molecular brightness, $q_2$, at a second polarization.

FIMDA typically only demands one detection channel and extracts all characteristics of both FCS and FIDA, i.e. diffusion time, $t_{diff}$, specific molecular brightness, q, and absolute concentration, c, from a single measurement [Palo, K., Mets, Ü., Jäger, S., Kask, P. and Gall, K. (2000) Fluorescence Intensity Multiple Distribution Analysis: Concurrent Determination of Diffusion Times and Molecular Brightness. *Biophys.J.* **79**]. This is achieved by fitting a series of different FIDA histograms obtained from the same measurement regarding different components. FIMDA increases the readout and improves likelihood of molecular resolution of different components of the sample effectively by one dimension. Therefore, when analyzing data collected by a FIMDA experiment, one will typically choose as identification parameters a specific molecular brightness and / or a diffusion time.

FILDA as well typically only demands one detection channel and extracts all characteristics of both FIDA and lifetime determination, i.e. specific molecular brightness, q, lifetime, t, and absolute concentration, c, from a single measurement. FILDA is based on fitting the two-dimensional histogram of the number of photons detected in counting time intervals of given width and the sum of excitation-to-detection delay times of these photons, once again regarding and quantifying different fluorescent components. The combined information yielded by FILDA results in significantly increased accuracy compared to that of FIDA and lifetime analysis alone. Consequently, when analyzing FILDA data, one will choose as identification parameters a lifetime and / or a specific molecular brightness.

In all of the above methods, which quantify each component by its concentration, c, or an according amplitude, the concentration or amplitude can as well be taken as identification parameter.

The most simple identification parameter for auto-fluorescence, quenching, and/or general deterioration is the light intensity, since these deteriorations lead to a change of the experimentally determined intensity; in principle, an increase is assumed in the case of auto-fluorescence and a decrease in the case of quenching.

However, since auto-fluorescence and quenching change the whole characteristic of the emitted and, thus, detected light, other read-out parameters can as well be used for identification. These are for example anisotropy (r), polarization (P), ratio of intensities (f), lifetime (t), brightness (q), concentration (c), brightness values of different detection channels ($q_1$ and $q_2$), diffusion time ($t_{diff}$), or other parameters resulting from a fit to the lifetime histogram, correlation function (FCS), FIDA-, or other histogram techniques (e.g. 2D-FIDA, FIMDA, or FILDA).

The identification parameter can preferably be a quality parameter of such a fit such as a $chi^2$-value, which is for example calculated from

$$chi^2 = \sum_x W(x)[\hat{P}(x) - P(x)]^2$$

(where the sum is performed over all data points x, $P(x)$ is the measured data, $P(x)$ the theoretical data, and $W(x)$ are the weights, e.g. expressed as $W(x) = M / P(x)$ with the total number of data points, M).

Further possible identification parameters result from a moment-analysis to the lifetime histogram, correlation function (FCS), FIDA-, 2D-FIDA-, FIMDA-, or FILDA-histogram by calculating moments, correlations, cumulants, and functions of these such as

- $M_1^2 / (M_2 - M_1^2)$, $(M_2 - M_1) / (M_1 T)$, and $K_3 \times 0.55 \times K_1 / K_2^2$ with the first and second moments, $M_1$ and $M_2$, and the first, second, and third factorial cumulants, $K_1$, $K_2$, and $K_3$, resulting from a one-dimensional function such as the FIDA-histogram.
- $| K_{10} + Kol - (K_{20} + 2K_{11} + K_{02})^2 / [(K_{30} + 3K_{21} + 3K_{12} + K_{03}) \times 0.55]$ with the factorial cumulants, $K_{xy}$, resulting from a two-dimensional function such as the 2D-FIDA-histogram.

In the case of observing images of the sample, additional identification parameters besides the ones mentioned above might come from all kinds of pattern recognition or image analysis algorithms as well as from image moment analysis.

Further identification parameters can also be obtained by relating one or more of the above parameters to their values obtained from control samples such as

$$[X(sample) - X(control\ B)] / [X(control\ A) - X(control\ B)]$$

or

$$[X(control\ A) - X(sample)] / [X(control\ A) - X(control\ B)]$$

where X(sample) is the identification parameter obtained from the sample and X(control A) and X(control B) are the identification parameters obtained from the two different control samples. For example, in the case of the binding of a tagged ligand to a protein, the latter relation expresses the inhibition of the binding if the control A sample represents the complete binding event and the control B the free ligand.

Data from an experiment can be classified to have been influenced by auto-fluorescence, quenching, and/or general deterioration, if e.g. at least one of the above identification parameters determined from the emitted and detected light of this sample is above or below a pre-selected threshold value. In case a set of various identification parameters is used for classification, the classification rules might be that all of the identification parameters have to be above or below certain corresponding threshold values, that only at least one identification parameter has to be above or below a certain corresponding threshold value, or that the set of identification parameters have to fulfill certain functions or relations between the corresponding parameters. For example, if two identification parameters, $X_1$ and $X_2$, are used, the classification rules might be

(a) $[x_1 > t\_up(x_1)$ and / or $x_1 < t\_low(x_1)]$ and / or $[x_2 > t\_up(x_2)$ and / or $x_2 < t\_low(x_2)]$ with upper and lower threshold values, t_up and t_low, of $X_1$ and $X_2$, respectively.
(b) $X_2 > f_1(x_1)$ and / or $x_2 < f_2(x_1)$ where $f_1$ and $f_2$ are functions of one of the parameters such as $f_i(x_1) = a_i + m_i \times X_1$ with i = 1 and 2 and constants $a_i$ and $m_i$.

The pre-selected threshold values, functions and/or relations can be set by default as e.g. known from theoretical assumptions (e.g. an upper threshold of $chi^2 = 2$), or be determined from the identification parameters obtained from a whole set of observed samples. In the latter case, threshold values, functions and/or relations can be determined from the one-dimensional distribution of one identification parameter or from the multi-dimensional distribution of a set of concurrent identification parameters as obtained from all or parts of the set of observed samples.

The distribution of identification parameters as determined from the set of observed samples can also be mathematically transformed or normalized to yield special properties of the distribution such as Gaussian distributions, e.g. by calculating standarized or studentized residuals.

The set of observed samples can either be all or parts of the samples to be analyzed and / or all or parts of control samples.

The threshold values, functions and/or relations can be derived from the distribution through functions of the mean, median, moments, cumulants, standard deviation, and/or the values themselves of the distribution. A possible function would be mean $\pm$ yxs or median $\pm$ yxs*, where y is a constant, e.g. 3, and mean and median are the mean and median of the distribution, respectively, s is the standard deviation of the distribution, and s* represents the median like standard deviation of the distribution. s* can either be obtained by (a) cutting of x % of the edges of the distribution (i.e., disregarding the x % highest and lowest values, x is a constant and can e.g. be 1) and calculating the common standard deviation of the remaining distribution, (b) calculating the median of the absolute differences between each point and the median of the distribution and multiplying this value by 1.482, (c) fitting a theoretical distribution which is a function of s* to the experimental distribution, such as the Gaussian distribution ($G(x) = A \times \exp(-2(x-x_0)^2 / (2s^{*2}))$ with an amplitude, A, and the mean, $x_0$) or (d) taking the mean of the values calculated for s, in (a), (b), and / or (c). The constant, y, can be set by hand after observation of the distribution or derived from theory. For example, if the distribution of identification parameters is Gaussian-like or has been mathematically transformed or normalized to a Gaussian-like distribution, the threshold is best set to y = 3. In this case, the probability to be a valid part of the distribution is 99.8 %, if an identification parameter is within the threshold (95.5 % for y = 2 and 70.5 % for y = 1).

For example, if only one identification parameter is chosen for identification, the corresponding one-dimensional distribution can be built up from the identification parameters obtained from several samples and be transformed to a Gaussian distribution, and the upper and lower threshold values be determined as mean + 3xstandard deviation and mean - 3xstandard deviation, respectively.

For example, if two identification parameters are chosen, one can

a) build up the corresponding two-dimensional distribution from the identification parameters obtained from a set of two different control samples (control A and control B),
b) determine the mean values ($m(\text{control A},X_i)$, $m(\text{control A},X_i)$) from each set of the two control samples for each identification parameter i = 1 and 2,
c) determine upper ($t\_up(\text{control A},X_i)$, $t\_up(\text{control B},X_j)$) and lower threshold values ($t\_low(\text{control A},X_i)$, $t\_low(\text{control B},X_j)$) from each set of the two control samples for each identification parameter i = 1 and 2 (e.g. by calculating mean + 3xstandard deviation and mean - 3xstandard deviation, respectively, for each set), and
d) classify auto-fluorescence, quenching, and/or general deterioration according to the condition;

$$x_2 < a_1 + m_1 \times x_1$$

or

$$x_2 > a_2 + m_2 \times x_1$$

or

$[x_1 < t\_low(\text{control A},x_1)$ and $x_1 < t\_low(\text{control B},X_i)]$ or
$[x_i > t\_up(\text{control A},x_1)$ and $x_1 > t\_up(\text{control B},x_1)]$
with

$$m_1 = [t\_low(\text{control A},x_2) -$$

$$t\_low(\text{control B},x_2)] / [m(\text{control A},x_2) - m(\text{control A},x_2)],$$

$$a_1 = t\_low(\text{control A},x_2) - m_1 \times m(\text{control A},x_2)$$

$$m_2 = [t\_up(\text{control A},x_2) - t\_up(\text{control B},x_2)] / [m(\text{control A},x_2) -$$

$$m(\text{control A},x_2)],$$

$$a_2 = t\_up(\text{control A},x_2) - m2 \times m(\text{control A},x_2).$$

Preferably, one of the identification parameter should be the intensity (I) (or the intensity normalized to the intensity obtained from control samples as described above), whereby auto-fluorescence is identified by an increased intensity, whereas quenching and/or general deterioration is identified by a decreased intensity.

The identification step can of course not only be applied to the said identification of general deterioration but in general to check the failure of any signal or analysis method such as a fit. For example, the results of any lifetime, FCS, FIDA, or further histogram-based analysis can be checked in this manner for a failure.

In summary, the identification step is preferably performed in three steps.

1. Selection of at least one appropriate identification parameter, one of which is preferably intensity (I) or normalized intensity.
2. Determination of pre-selected threshold values, functions, and/or relations from the said chosen parameters.
3. Identification of auto-fluorescence and/or quenching according to conditions specified by the said threshold values, functions, and/or relations.

It is particularly preferred to conduct after the identification of data being influenced by auto-fluorescence, quenching, and/or general deterioration, the following steps:

(1) Correction of the read-out in the case of auto-fluorescence to separate auto-fluorescence from the light emitted by the particles of interest.

(2) Test-procedure to check whether the correction procedure has succeeded.

The correction step is performed for correcting the signal to typically separate interfering signal and extract only the information coherent with the light emitted from the particles of interest.

The correction step for interfering auto-fluorescence signal preferably demands a read-out which is able to distinguish secondary light emitting particles with different emission characteristics within the same sample and to quantify them using a multi-component analysis, i.e. which molecularly resolves the detected light. As mentioned above, read-out methods that are capable of this molecular resolution are the lifetime determination, FCS, FIDA, and further histogram-based methods such as 2D-FIDA, FIMDA, or FILDA. These read-out methods enable to apply a multi-component fit to the functions or histograms obtained from the detected light and, thus, to resolve distinguishable light emitting particles.

Furthermore, the lifetime analysis based methods (lifetime determination and FILDA) enable to distinguish between an elastic light emission process such as scattering and an inelastic emission process such as luminescence, since the elastic emission is a temporally prompt process (lifetime t = 0 ns) while the inelastic emission is generally delayed with respect to the excitation time (t > 0 ns). Therefore, lifetime analysis offers the possibility to explicitly regard elastic light emitting particles.

In contrast, all brightness-based methods allow to explicitly regard light emitting particles with high concentration and very low brightness (detected counts per particle) such as scattering solvent particles, since the signal amplitudes originating from such components are simply Poissonian distributed. Such a signal shall be denoted FIDA-background later on. In general, this FIDA-background is fixed to a pre-selected value, e.g. determined from control experiments.

The correction procedure is applied by preferably adding an additional component to the fit, which accounts for the additional auto-fluorescence "component". Thus, the remaining components / light are cleared from the interfering auto-fluorescence light. According to the read-out method, this additional component might be accounted for in the fit as follows:

- lifetime determination: an additional lifetime, which is either fixed to a pre-selected value or freely fitted, and / or a freely fitted amount of elastic light emitting particles.
- FCS: an additional diffusion time, which is either fixed to a pre-selected value or freely fitted;
- FIDA: an additional brightness, which is either fixed to a pre-selected value or freely fitted, or a freely fitted FIDA-background.
- 2D-FIDA: an additional pair of brightness values, where either both values are fixed to pre-selected values, only one value is fixed while the other is subject to fitting, or both values are subject to fitting, and / or a pair of FIDA-background values, where either both values are fixed to pre-selected values, only one value is fixed while the other is subject to fitting, or both values are subject to fitting.
- histogram-based methods in general: an additional set of read-out parameters (e.g. brightness, lifetime, diffusion time, and / or FIDA-background), where either all values are fixed to pre-selected values, only at least one value is fixed while the others are subject to fitting, or all values are subject to fitting.

In general, the light emission of the auto-fluorescent particles is rather weak compared to the actual light emitting particles of interest. Therefore, their brightness can be assumed to be rather low, and, if fixed within a FIDA(-based) fit, the brightness values of the additional auto-fluorescent component can be fixed to a rather low value (e.g. > 0 kHz to < 10 kHz).

Furthermore, auto-fluorescent particles are very often highly concentrated within the sample (e.g., in screening and HTS applications compounds are added in µM-concentration, while the light emitting particles of interest are concentrated at least below 50 nM for FIDA-based applications). Therefore, the auto-fluorescence emission is very FIDA-background like and can be considered as FIDA-background in the fit or as an additional component with its concentration value fixed to a rather high value (c > 50).

Since an additional component might deteriorate the accuracy of the results of the fit, it is very often preferable to apply this auto-fluorescence correction procedure only to those data which are identified to reveal auto-fluorescence properties.

As outlined above, preferably a test procedure to check whether the correction step has succeeded is performed in the same manner as the identification step described above. Basically, failed correction procedures are identified and marked as bad data points.

In a first step, at least one parameter is chosen which identifies the failure of the correction procedure, denoted failure parameter. The potential failure parameters are the same as previously described as identification parameters in the identification step. Preferably, at least one of the chosen failure parameters is a resulting value of the applied fit, e.g., a quality parameter such as the chi$^2$ value, the lifetime, diffusion time, a brightness value, or the concentration.

In a second step, threshold values, functions, and/or relations are specified from the said chosen failure parameters as described in detail in the identification step, i.e. by setting them to pre-selected values or expressions as e.g. known from theoretical assumptions or by determining them from the distribution of failure parameters obtained from a whole set of observed samples.

In a third step, a failure is classified according to conditions specified by the said threshold values, functions, and/or relations - a procedure that has in detail been described in the identification step.

The test procedure can of course not only be applied to the said correction procedure but in general to check the failure of any analysis method such as a fit. For example, the results of any lifetime, FCS, FIDA, or histogram-based analysis can be checked in this manner for a failure.

Other objects, advantages, and novel features of the invention will become apparent from the following detailed description of the invention when taken in conjunction with the accompanying drawings.

Figure 1A-F    illustrates impacts of the effect of quenching compounds on fluorescence emission data and presents different identification methods.

Figure 2A-C    illustrates impacts of the effect of auto-fluorescent compounds on fluorescence emission data using polarization and 2D-FIDA read-outs and presents different identification methods, a correction procedure, and a procedure for checking possible failures of the correction step.

Figure 3A-B    illustrates impacts of the effect of auto-fluorescent compounds on fluorescence emission data using FIDA read-outs and presents a correction procedure.

Figure 4A-B    illustrates screening for activating compounds using polarization and 2D-FIDA read-outs and the identification of auto-fluorescent and quenching compounds, a correction procedure, and a check of the correction step in the case of auto-fluorescence.

Figure 5A-B    illustrates an identification of auto-fluorescent and quenching compounds in high-throughput-screening (HTS)

### *Examples*

The measurements presented in the following were performed on an epi-illuminated confocal fluorescence microscope as described in [P. Kask, K. Palo, N. Fay, L. Brand, Ü. Mets, D. Ullmann, J. Jungmann, J. Pschorr, K. Gall (2000) Biophys.J, 78, 1703-1713]. A polarized continuous-wave (cw) laser either at 543 nm or 633 nm was used to excite a fluorophore (Tetramethyl-Rhodamine (TAMRA) for 543 nm excitation, MR-121 for 633 nm excitation) alone or covalently linked to a molecule of interest. Detection was performed with a single detector or two detectors (Avalanche-Photo-Diode, APD) monitoring the fluorescence light emitted with parallel or perpendicular polarization with respect to the polarization of the exciting light. While the one-detector set-up was used for the fluorescence data analysis via FIDA, the two-detector set-up was used for the determination of the polarization or anisotropy values and analysis via 2D-FIDA.

### Example 1

In a first measurement, different amounts of various water soluble chemical compounds were added to an aqueous TAMRA solution (about 15 nM, resulting in 96 different samples) and the total intensity, $I_{tot}$, as well as the polarization, P, determined for the 96 different samples (two-detector set-up and measurement time of two seconds). $I_{tot}$ and P were calculated from the intensities with parallel, $I_p$, and perpendicular, $I_s$, polarization with respect to the exciting light.

$$I_{tot} = I_p + 2\,I_s \qquad P = (I_p - I_s) / (I_p + I_s) \times 1000$$

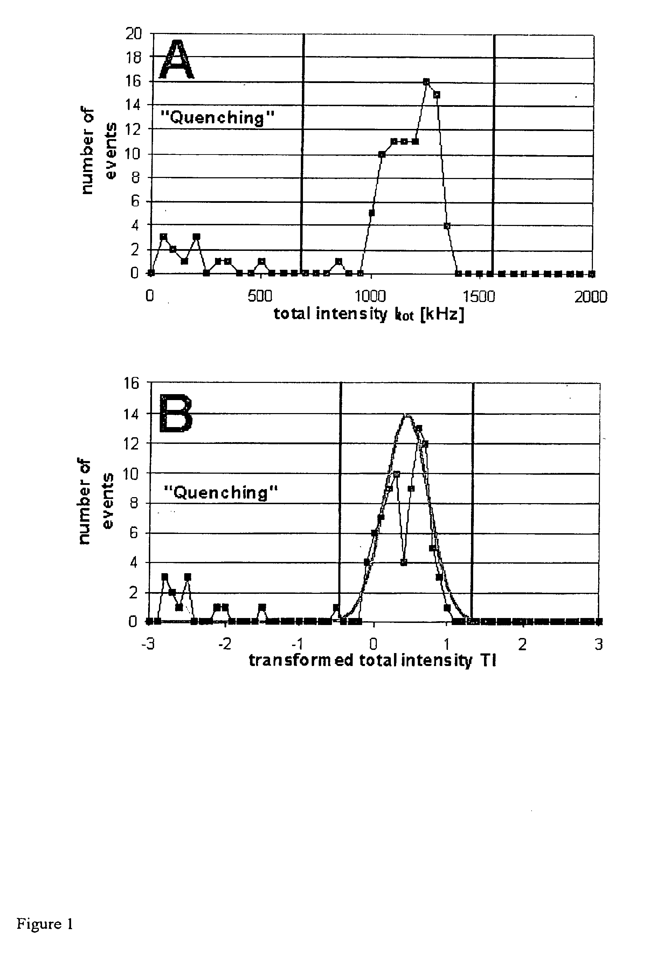

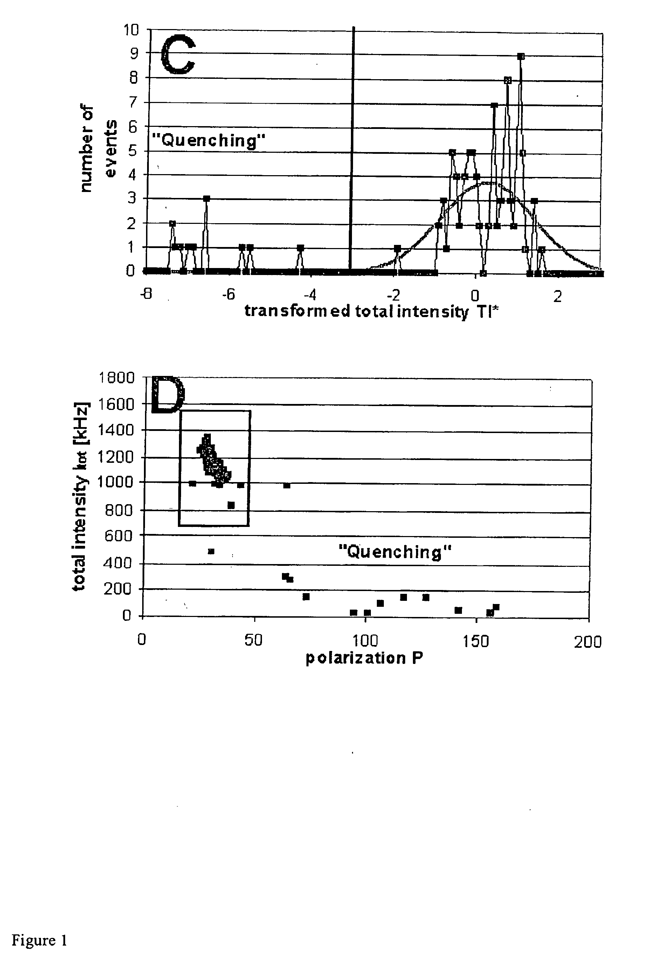

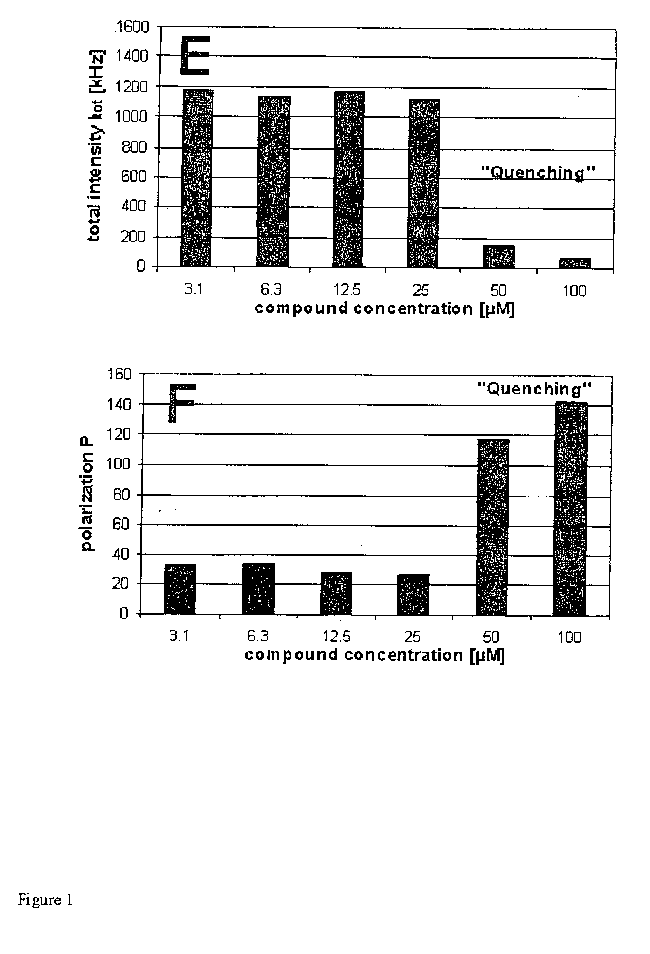

Subsequently, 4 different methods were applied to identify samples with deteriorated signal as presented in Figure 1.

Figure 1A shows the one-dimensional distribution of $I_{tot}$ over all 96 samples (dotted line) together with the thresholds (vertical lines) for identification of deteriorated signal. The thresholds were set according to the median, $med(I_{tot})$ = 1119.9 kHz, and the median like standard deviation, $s^*(I_{tot})$ = 145.8 kHz, of $I_{tot}$ from all 96 samples ($s^*$ has been described previously); $threshold(I_{tot})$ = $med(I_{tot}) \pm 3 \times s^*(I_{tot})$. All samples that exhibited a value of $I_{tot}$ outside these thresholds were identified to be deteriorated, in this case 12 samples.

Figure 1B shows the one-dimensional distribution of the mathematically transformed total intensity, TI, together with a Gaussian fit to the distribution (gray line; $G(TI) = A \times exp[-(TI-TI_0)^2/(2\sigma^2)]$ with the variables A, $TI_0$, and $\sigma$ subject to fitting and resulting in A = 13.9, $TI_0$ = 0.44, and $\sigma$ = 0.3) and the thresholds (vertical lines) for identification of deteriorated signal. The mathematical transformation was performed according to the steps; (a) calculation of the median, $med(I_{tot})$, of $I_{tot}$ from all 96 samples, (b) calculating the difference, $res(I_{tot}) = I_{tot} - med(I_{tot})$, for each sample, (c) determination of the mean, $mean(res(I_{tot}))$, and the standard deviation, $s(res(I_{tot}))$, of $res(I_{tot})$ from all 96 samples, (d) calculating TI = $[res(I_{tot}) - mean(res(I_{tot}))] / s(res(I_{tot}))$. The thresholds were determined from the resulting value of $\sigma$ and $TI_0$ of the Gaussian fit; $threshold(TI) = TI_0 \pm 3 \times \sigma$. All samples that exhibited a value of TI outside these thresholds were identified to be deteriorated, in this case 13 samples.

Figure 1C shows the one-dimensional distribution of the slightly different mathematically transformed total intensity, TI*, together with a Gaussian fit to the distribution (gray line; $G(TI^*) = A \times exp[-(TI^*-TI_0^*)^2/(2\sigma^{*2})]$ with the variables A, $TI_0^*$, and $\sigma^*$ subject to fitting and resulting in A = 3.788, $TI_0^*$ = 0.266, and $\sigma$ = 1.11) and the thresholds (vertical lines) for identification of deteriorated signal. In this case, the mathematical transformation was performed according to the steps; (a) calculation of the median, $med(I_{tot})$, of $I_{tot}$ from all 96 samples, (b) calculating the difference, $res(I_{tot}) = I_{tot} - med(I_{tot})$, for each sample, (c) determination of the median, $median(res(I_{tot}))$, and the median like standard deviation, $s^*(res(I_{tot}))$, of $res(I_{tot})$ from all 96 samples, (d) calculating TI* = $[res(I_{tot}) - median(res(I_{tot}))] / s^*(res(I_{tot}))$. The thresholds were determined from the resulting value of $\sigma^*$ and $TI_0^*$ of the Gaussian fit; $threshold(TI^*) = TIo^* \pm 3 \times \sigma^*$. All samples that exhibited a value of TI outside these thresholds were identified to be deteriorated, in this case 12 samples.

Figure 1D represents the two-dimensional distribution of joint total intensity - polarization pairs, $(I_{tot}, P)$, from all 96 samples (black dots) together with the thresholds (black lines) for identification of deteriorated signal. The thresholds were set according to the median, $med(I_{tot})$ = 1119.9 kHz and $med(P)$ = 30.72, and the median like standard deviation, $s^*(I_{tot})$ = 145.8 kHz and $s^*(P)$ = 5.15, of $I_{tot}$ and P respectively from all 96 samples; $threshold(I_{tot}) = med(I_{tot}) \pm 3 \times s^*(I_{tot})$ and $threshold(P) = med(P) \pm 3 \times s^*(P)$. All samples that exhibited a value of $I_{tot}$ or P outside these thresholds were identified to be deteriorated, in this case 13 samples.

By one or the other method, the same conspicuous samples were identified by a decreased intensity and an increased polarization. To find the reason behind this deterioration, one conspicuous compound was added at rising concentrations to the dye solution. The measured total intensity, $I_{tot}$, and polarization, P, are shown in Figures 1E and F, respectively. One clearly observes, that the deterioration was caused by a quenching interference of the compound to the fluorescence emission of the dye, which was a decreasing intensity accompanied by an increase in polarization.

### Example 2

In a second measurement the binding of a small MR-121-labeled peptide to the SH2-domain of the Grb2-protein was monitored by a change in the fluorescence polarization, P, of the MR-121 fluorescence emission (two-detector set-up, measurement time of ten seconds). In the different samples, the binding was increasingly inhibited by the titration of unlabeled peptide. Thereby, nine different concentrations of unlabeled peptide were measured five times each, i.e. 45 samples were observed. While one set of 45 samples only contained the assay components (labeled and unlabeled peptide and protein), auto-fluorescent compounds (1 µM Rhodamine 800) had been added to another set of 45 samples. 2D-FIDA with a one-component fit was applied to the signal of all samples. This analysis yielded values of concentration, c, brightness, $q_1$ and $q_2$, of each detection channel monitoring the light emission with parallel and perpendicular polarization with respect to the exciting light, respectively, and of chi$^2$, which is the quality parameter of the fit (as presented previously). The total signal intensity was once again calculated from the intensities with parallel, $I_p$, and perpendicular, $I_s$, polarization with respect to the exciting light, while the polarization, P, was calculated from $q_1$ and $q_2$.

$$I_{tot} = I_p + 2\,I_s \qquad P = (q_1 - q_2)\,/\,(q_1 + q_2) \times 1000$$

In addition, two control samples were measured ten times each, resulting as well in values of c, $q_1$ and $q_2$, chi$^2$, $I_{tot}$, and P. The ten high control samples, which contained only labeled peptide and protein (resulting in mainly bound labeled peptide), resulted in values of c(high), $q_1$(high) and $q_2$(high), chi$^2$(high), $I_{tot}$(high), and P(high). The low control, which contained labeled peptide, excess of unlabeled peptide, and protein (resulting in totally inhibited binding, thus mainly unbound labeled peptide), resulted in values of c(low), $q_1$(low) and $q_2$(low), chi$^2$(low), $I_{tot}$(low), and P(low). This enabled the calculation of the normalized total intensity, NI, and the inhibition, Inh, for each measurement X.

$$NI(X) = [I_{tot}(X) - I_{tot}(low)] \,/\, [I_{tot}(high) - I_{tot}(low)] \times 100$$

$$Inh(X) = [P(high) - P(X)] \,/\, [P(high) - P(low)] \times 100$$

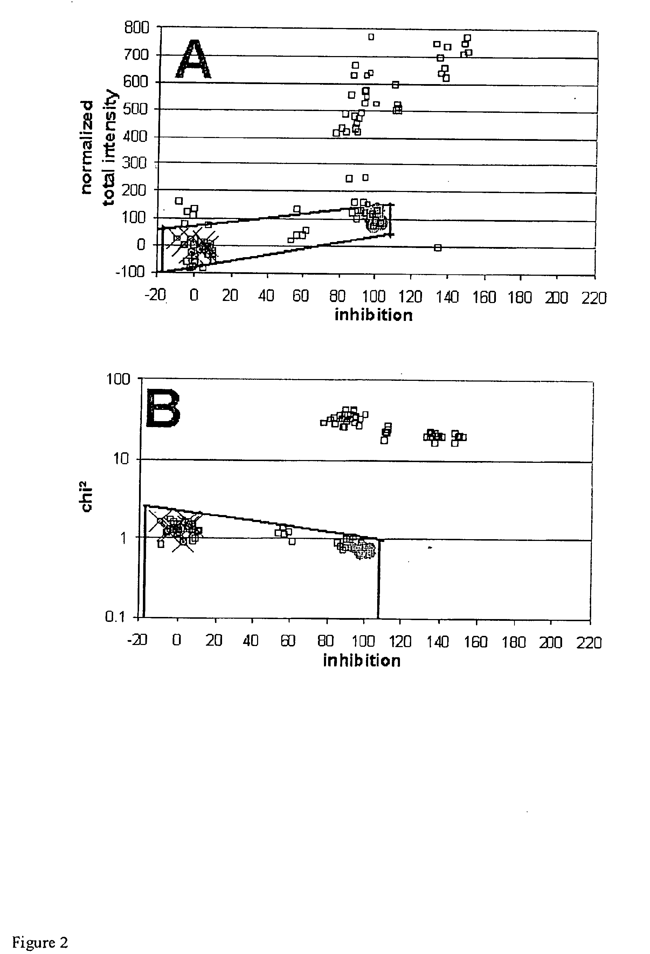

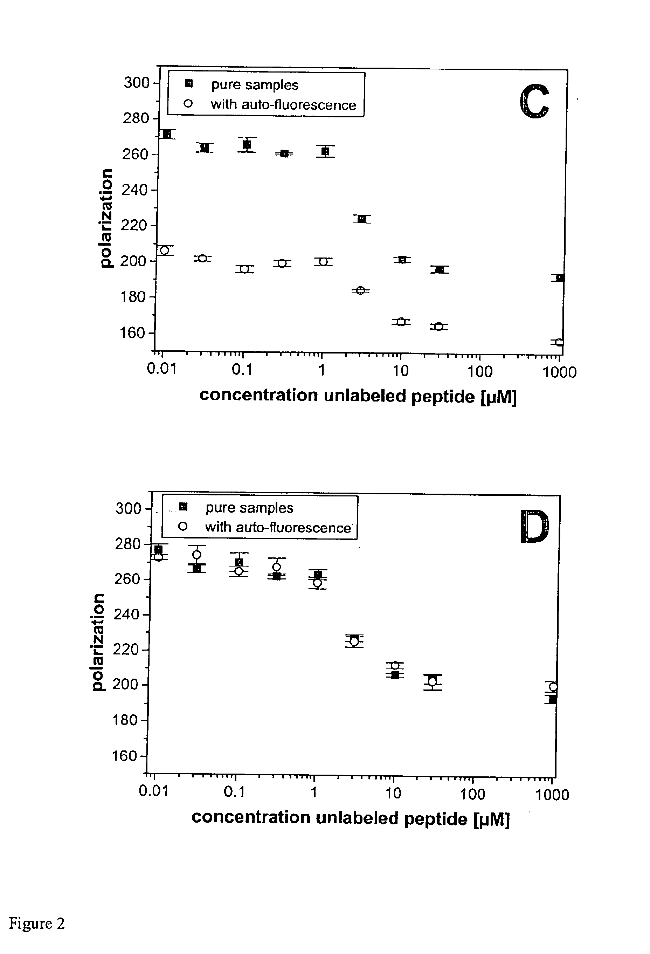

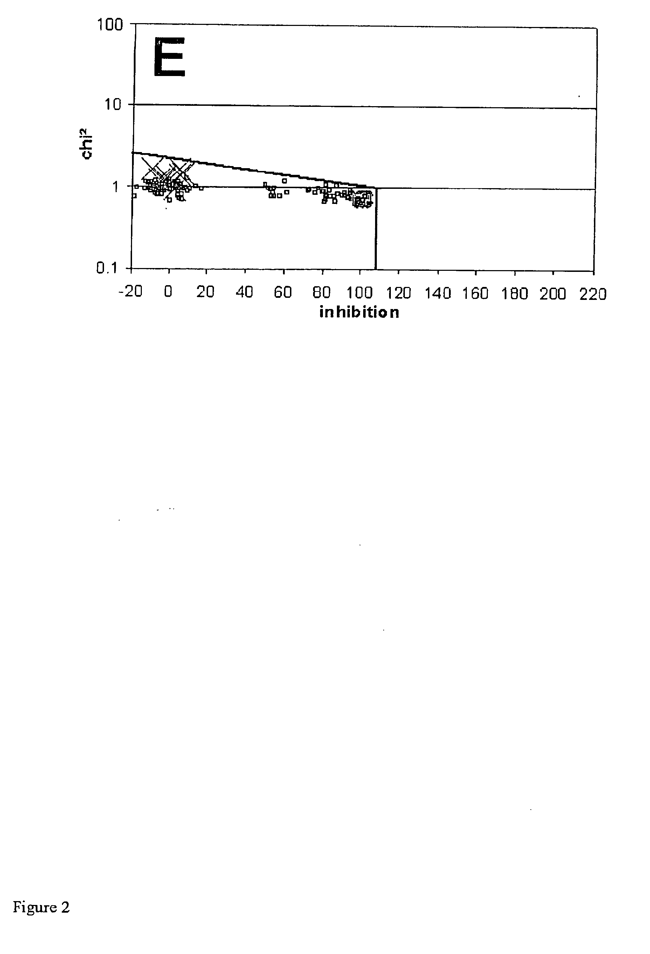

Figures 2A and B present two different methods how samples with auto-fluorescence can be identified.

Figure 2A plots the two-dimensional distribution of joint normalized total intensity - inhibition pairs, (NI, Inh), from both sets of 45 samples (black dots), the high samples (gray cross), and the low samples (gray circles) together with the threshold functions (black lines) for said identification. The thresholds were set by the mean, m(NI,high) = 0, m(Inh,high) = 0, m(NI,low) = 100, and m(Inh,low) = 100, and the standard deviation, s(NI,high) = 19.7, s(Inh,high) = 5.8, s(NI,low) = 17.9, and s(Inh,low) = 2.7, of NI and Inh from all ten high and low samples, respectively;

$$t\_1(Inh) = m(Inh,high) - 3 \times s(Inh,high),$$

$$t\_2(Inh) = m(Inh,low) + 3 \times s(Inh,low),$$

$$t\_3(NI) = m(NI,low) - 3 \times s(NI,low),$$

$$t\_4(NI) = m(NI,low) + 3 \times s(NI,low),$$

$$t\_5(NI) = m(NI,high) - 3 \times s(NI,high),$$

$$t\_6(NI) = m(NI,high) + 3 \times s(NI,high),$$

An auto-fluorescent sample was identified if its read-out, NI or Inh, obeyed one of the following conditions;

$$Inh < t\_1(Inh),$$

$$Inh > t\_2(Inh),$$

$$NI < a_1 + b_1 \times Inh,$$

or

$$NI > a_2 + b_2 \times Inh,$$

with

$$a_1 = t\_3(NI) - b_1 \times m(Inh,low),$$

$$a_2 = t\_4(NI) - b_2 \times m(Inh,low),$$

$$b_1 = [t\_3(NI) - t\_5(NI)] / [m(Inh,low) - m(Inh,high)],$$

and

$$b_2 = [t\_4(NI) - t\_6(NI)] / [m(Inh,low) - m(Inh,high)].$$

In this way, all 45 samples with added auto-fluorescence were identified.

Figure 2B plots the two-dimensional distribution of $chi^2$ - inhibition pairs, ($chi^2$, Inh), from both sets of 45 samples (black dots), the high samples (gray cross), and the low samples (gray circles) together with the threshold functions (black lines) for said identification. The thresholds were set by the mean, $m(chi^2,high)$ = 1.37, m(Inh,high) = 0, $m(chi^2,low)$ = 0.71, and m(Inh,low) = 100, and the standard deviation, $s(chi^2,high)$ = 0.24, s(Inh,high) = 5.8, $s(chi^2,low)$ = 0.06, and s(Inh,low) = 2.7, of $chi^2$ and Inh from all ten high and low samples, respectively;

$$t\_1(Inh) = m(Inh,high) - 3 \times s(Inh,high),$$

$$t\_2(Inh) = m(Inh,low) + 3 \times s(Inh,low),$$

$$t\_3(chi^2) = m(chi^2,low) - 5 \times s(chi^2,low),$$

$$t\_4(chi^2) = m(chi^2,low) + 5 \times s(chi^2,low),$$

$$t\_5(chi^2) = m(chi^2,high) - 5 \times s(chi^2,high),$$

$$t\_6(chi^2) = m(chi^2,high) + 5 \times s(chi^2,high),$$

An auto-fluorescent sample was identified if its read-out, $chi^2$ or Inh, obeyed one of the following conditions;

$$Inh < t\_1(Inh),$$

$$Inh > t\_2(Inh),$$

$$chi^2 < a_1 + b_1 \times Inh,$$

or

$$chi^2 > a_2 + b_2 \times Inh,$$

with

$$a_1 = t\_3(chi^2) - b_1 \times m(Inh,low),$$

$$a_2 = t\_4(chi^2) - b_2 \times m(Inh,low),$$

$$b_1 = [t\_3(chi^2) - t\_5(chi^2)] / [m(Inh,low) - m(Inh,high)],$$

and

$$b_2 = [t\_4(chi^2) - t\_6(chi^2)] / [m(Inh,low) - m(Inh,high)].$$

Once again, all 45 samples with added auto-fluorescence were identified.

Figure 2C shows the titration curves for the pure samples (black dots) and the samples with added auto-fluorescence (transparent dots), i.e. the curve shows the change of the polarization, P, with increasingly added unlabeled peptide (the error bars were obtained from the results of the five samples observed for each titration point). The effect of the auto-fluorescence on the detected fluorescence becomes evident by a decreased polarization value. Fitting the auto-fluorescent samples with an additional pair of floating FIDA-background values resulted in a correction of the read-out. This is demonstrated in Figure 2D, where the corrected read-out of the auto-fluorescent samples coincides with the read-out of the pure samples.

Figure 2E demonstrates the test procedure of the correction step. Similar to Figure 2B, it plots the two-dimensional distribution of corrected $chi^2$ - inhibition pairs, $(chi^2, Inh)$, from both sets of 45 samples (black dots), the low samples (gray cross), and the high samples (gray circles) together with the threshold functions (black lines) for said identification. The thresholds were identically set as in Figure 2 B.

The failure of the correction step was identified if the according read-out, $chi^2$ or Inh, obeyed one of the following conditions;

$$Inh > t\_2(Inh), chi^2 < a_1 + b_1 \times Inh,$$

or

$$chi^2 > a_2 + b_2 \times Inh,$$

with

$$a_1 = t\_3(chi^2) - b_1 \times m(Inh,low),$$

$$a_2 = t\_4(chi^2) - b_2 \times m(Inh,low),$$

$$b_1 = [t\_3(chi^2) - t\_5(chi^2)] / [m(Inh,low) - m(Inh,high)],$$

and

$$b_2 = [t\_4(chi^2) - t\_6(chi^2)] / [m(Inh,low) - m(Inh,high)].$$

In this way, only one failure of the correction step was identified.

### Example 3

In a third measurement, the binding of a TAMRA-labeled ligand to membrane vesicles with the appropriate G-protein coupled receptors was monitored using FIDA (one-detector set-up, measurement time of two seconds). The ligand bound to the vesicles can be distinguished from the free ligand by an increase in the fluorescence brightness, q, since the vesicles can bind several ligands. In FIDA, these two components were distinguished in a two-component fit and their brightness, q(ligand) and q(vesicle), and concentration values, c(ligand) and c(vesicle), were determined. For every sample the binding degree was determined according to the equation, binding

$$degree = c(vesicle) \times q(vesicle) / [c(vesicle) \times q(vesicle) + c(ligand) \times q$$

$$(ligand)].$$

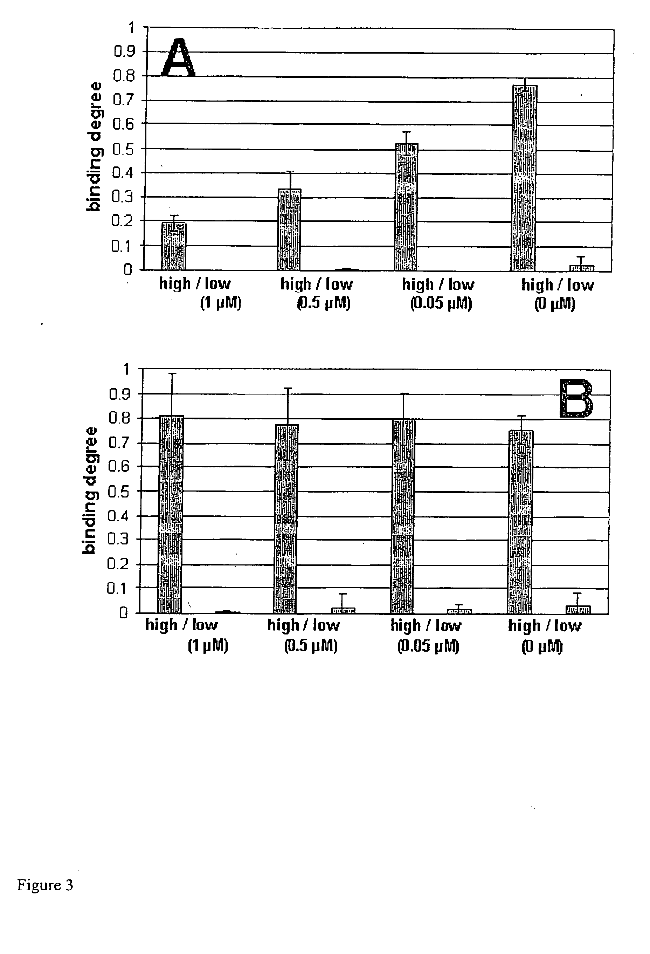

48 high control and 48 low control sample were measured. The high control contained both, labeled ligand and vesicles, while the low control solely contained labeled ligand. In a first set of measurements, the pure 96 samples were observed. In additional sets of measurement, the 96 samples were observed after adding different amounts of auto-fluorescent substances (0.05 $\mu$M, 0.5 $\mu$M, and 1 $\mu$M of the dye C682). The binding degree resulting from the two-component FIDA fit is shown in Figure 3A. The apparently decreased binding degree shows the effect of the increasingly added auto-fluorescent substances.

For the correction, a three-component FIDA analysis was performed on the same fluorescence data sets. Thereby, an additional component with floating concentration, c(auto-fluorescence), and fixed brightness value, q(auto-fluorescence) = 1 kHz, was added to the two-component fit of Figure 3A. The fixed brightness value was rather low compared to the mean brightness values obtained for the free ligand, q(ligand) = 9 kHz, and the ligand bound to the vesicle, q(vesicle) = 1350 kHz. The resulting values of the binding degree coincides with that of the pure samples, which indicates the success of the correction procedure. However, a decreased accuracy of the determination of the binding degree becomes evident by the increased error bars, which is due to the presence of the interfering auto-fluorescence as well as the correction procedure. Therefore, it is recommendable to apply this correction step solely to those samples which are identified to emit auto-fluorescence.

### Example 4

In a fourth measurement, 96 different compounds were tested for the activation of a DNA-binding protein. Upon activation, the protein was able to bind the single DNA strand. Since the DNA strand was labeled with TAMRA, the activation was accompanied by an increase in the polarization, P. A positive compound, which activated the protein, should therefore result in an increase of polarization, P. To check the reactivity of the compounds, the polarization read-out was compared to that of positive and negative controls. While the negative control just like a non-activating compound comprised the unbound DNA strand (low polarization), the positive control just like an activating compound comprised the DNA-peptide complex (high polarization). As in the previous example 2, the measurements were performed with two detectors monitoring the different polarization directions of the light emission and analyzed using 2D-FIDA regarding only one fluorescent component. This resulted in values of the intensity, $I_p$ and $I_s$, as well as of the brightness, $q_1$ and $q_2$, of the fluorescence with parallel and perpendicular polarization with respect to the polarization of the exciting light, respectively, and of the mean concentration, c, of the fluorescent component. This enabled the calculation of the total intensity, $I_{tot}$, the total brightness, $q_{tot}$, the activation, Act, as well as the normalized total signal, NI.

$$I_{tot} = I_p + 2 I_s \qquad q_{tot} = q_1 + q_2 \qquad P = (q_1 -$$

$$q_2) / (q_1 + q_2) \times 1000$$

$$NI(X) = [I_{tot}(X) - I_{tot}(pos)] / [I_{tot}(neg) - I_{tot}(pos)] \times 100$$

$$Act(X) = [P(X) - P(neg)] / [P(pos) - P(neg)] \times 100$$

The whole experiment included the measurement (two second duration) of 96 different compounds added to the assay (labeled DNA and protein) as well as nine positive controls and 96 negative controls.

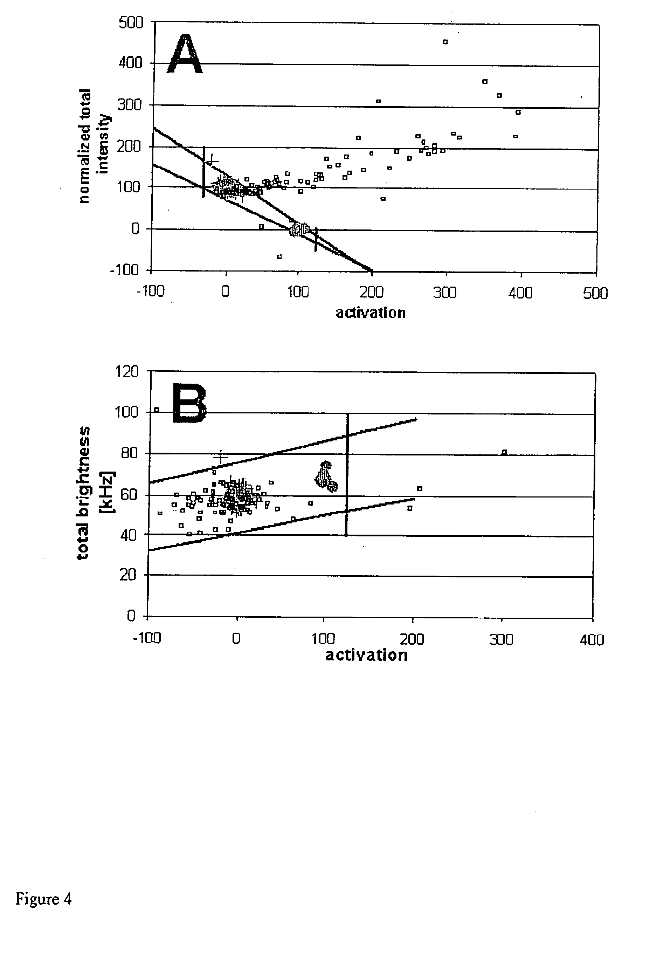

For the identification of possible auto-fluorescent or quenching compounds, Figure 4A plots the two-dimensional distribution of joint normalized total intensity - activation pairs, (NI, Act), from the 96 compound samples (black dots), the 96 negative control samples (gray cross), and the six positive control samples (gray circles) together with the threshold functions (black lines) for said identification. In the same way as in Figure 2A, the thresholds were set by the mean, $m(NI,pos) = 0$, $m(Act,pos) = 100$, $m(NI,neg) = 100$, and $m(Act,neg) = 0$, and the standard deviation, $s(NI,pos) = 4.1$, $s(Act,pos) = 4.7$, $s(NI,neg) = 9.3$, and $s(Act,neg) = 6.2$, of NI and Act from all six positive and 96 negative control samples, respectively;

$$t\_1(Act) = m(Act,neg) - 3 \times s(Act,neg),$$

$$t\_2(Act) = m(Act,pos) + 3 \times s(Act,pos),$$

$$t\_3(NI) = m(NI,neg) - 3 \times s(NI,neg),$$

$$t\_4(NI) = m(NI,neg) + 3 \times s(NI,neg),$$

$$t\_5(NI) = m(NI,pos) - 3 \times s(NI,pos),$$

$$t\_6(NI) = m(NI,pos) + 3 \times s(NI,pos).$$

An auto-fluorescent compound sample was identified if its read-out, NI or Act, was above the upper threshold line, i.e. obeyed the following condition;

$$NI > a_2 + b_2 \times Act,$$

with

$$a_2 = t\_4(NI) - b_2 \times m(Act,neg),$$

and,

$$b_2 = [t\_4(NI) - t\_6(NI)] / [m(Act,neg) - m(Act,pos)].$$

In this way, 67 compound samples were identified to be auto-fluorescent.

A quenching compound sample was identified if its read-out, NI or Act, was below the lower threshold line or elsewhere to the left or right of the two vertical lines, i.e. obeyed one of the following conditions and was not auto-fluorescent;

$$Act < t\_1(Act), Act > t\_2(Act),$$

or

$$NI < a_1 + b_1 \times Act,$$

with

$$a_1 = t\_3(NI) - b_1 \times m(Act,neg),$$

and,

$$b_1 = [t\_3(NI) - t\_5(NI)] / [m(Act,neg) - m(Act,pos)].$$

In this way, two compound samples were identified to be quenching and taken away from further analysis (bad data points).

In a second step, the correction procedure was applied to the fluorescence data from the compound samples identified as being auto-fluorescent (while the results of the analysis were maintained for the valid compound samples). The correction procedure comprised a 2D-FIDA fit regarding one component as before and in addition two floating FIDA-background values as already applied in example 2. The success of the correction procedure was checked (see Figure 4B). Similar to Figure 2B, it plots the two-dimensional distribution of the corrected total brightness - activation pairs, $(q_{tot}, Act)$, from the 94 left samples (black dots), the 96 negative samples (gray cross), and the six positive samples (gray circles) together with the threshold functions (black lines) for the identification of failures of the correction algorithm or the analysis in principle. The thresholds were set by the mean, $m(q_{tot},pos) = 68.0$, $m(Act,pos) = 100$, $m(q_{tot},neg) = 58.4$, and $m(Act,neg) = 0$, and the standard deviation, $s(q_{tot},pos) = 3.7$, $s(Act,pos) = 4.7$, $s(q_{tot},neg) = 3.5$, and $s(Act,neg) = 6.2$, of $q_{tot}$ and Act from all six positive and 96 negative control samples, respectively;

$$t\_1(Act) = m(Act,neg) - 3 \times s(Act,neg),$$

$$t\_2(Act) = m(Act,pos) + 3 \times s(Act,pos),$$

$$t\_3(q_{tot}) = m(q_{tot},neg) - 5 \times s(q_{tot},neg),$$

$$t\_4(q_{tot}) = m(q_{tot},neg) + 5 \times s(q_{tot},neg),$$

$$t\_5(q_{tot}) = m(q_{tot},pos) - 5 \times s(q_{tot},pos),$$

$$t\_6(q_{tot}) = m(q_{tot},pos) + 5 \times s(q_{tot},pos).$$

The said failure was identified if the according read-out, $q_{tot}$ or Act, obeyed one of the following conditions;

$$Act > t\_2(Act), q_{tot} < a_1 + b_1 \times Act,$$

or

$$q_{tot} > a_2 + b_2 \times Act,$$

with $a_1 = t\_3(q_{tot}) - b_1 \times m(Act,low)$, $a_2 = t\_4(q_{tot}) - b_2 \times m(Act,low)$,

$$b_1 = [t\_3(q_{tot}) - t\_5(chi^2)] / [m(Act,low) - m(Act,high)], \text{ and}$$

$$b_2 = [t\_4(q_{tot}) - t\_6(q_{tot})] / [m(Act,low) - m(Act,high)].$$

In this way, eight failures of the whole analysis process were identified.

Using the identification step and correction procedure, together with the failure check, one can not only exclude possible false positive compounds (i.e., apparently activating in this case) due to auto-fluorescence or quenching, but also correct the read-out for auto-fluorescent compounds. In a drug discovery process, this does not only save precious money and time, but also helps to find possible positive and auto-fluorescent drug candidates which would otherwise be lost.

**Example 5**

In a further measurement the identification step was applied to a high-throughput-screening (HTS) run. In this HTS run different compounds were tested for the inhibition of the dephosphorylation of a phosphotyrosine-containing peptide by an appropriate protein tyrosine phosphatase. An antibody was used in this experiment which only binds to the phosphorylated peptide. Since the peptide was fluorescently labeled, binding of the antibody to the phosphorylated peptide increased the polarization, P, of this complex. Therefore, dephosphorylation resulted in a loss of antibody binding and concomitant decrease of polarization. A positive compound, which inhibited the dephosphorylation, should therefore result in an increase of polarization, P. To check the reactivity of the compounds, the polarization read-out was compared to that of positive and negative controls. While the negative control just like a non-inhibiting compound comprised the dephosphorylated peptide (low polarization), the positive control just like an inhibiting compound comprised the antibody-peptide complex (high polarization). As in the previous examples 2 and 4, the measurements were performed with two detectors monitoring the different polarization directions of the light emission and analyzed using 2D-FIDA with a one-component fit. As outlined, this enabled the calculation of the inhibition, Inh, as well as the normalized total signal, NI.

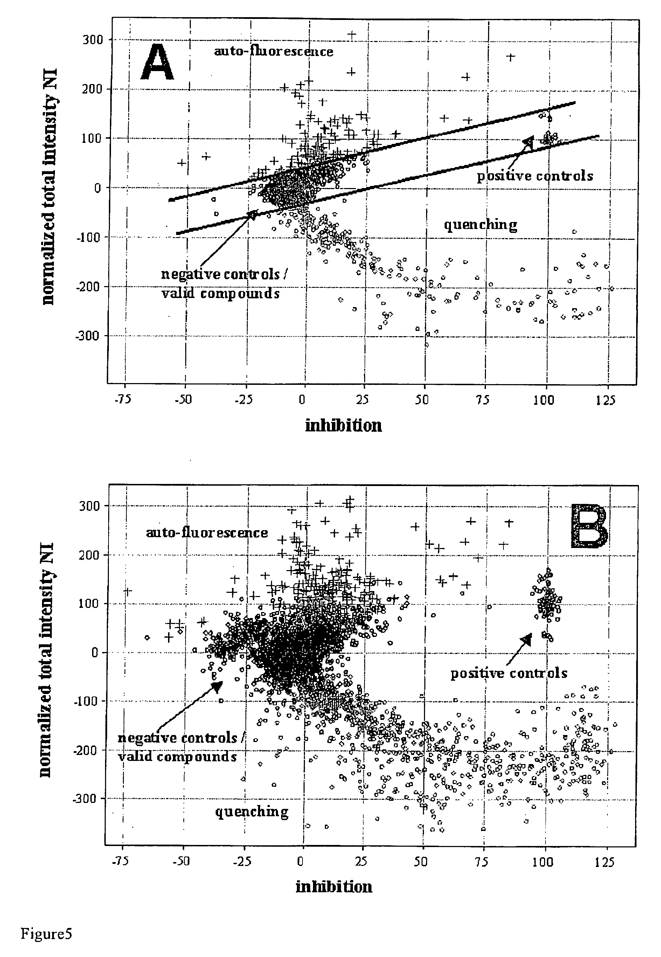

6144 different compounds were added to the assay (labeled peptide, antibody, and phosphatase) and distributed on four different nanotiter-plates with 2080 wells each. Furthermore, each plate contained 24 positive and 24 negative control samples. The HTS run was performed by measuring each sample once for one second. The identification step for auto-fluorescent or quenching compounds is outlined in Figure 5A. In the same way as outlined in detail in Figure 2A and Figure 4A, the threshold conditions for the identification were set individually for each plate according to the mean values and standard deviations of Inh and NI of the positive and negative controls (mean $\pm$ 3 x standard deviation).

This is shown in Figure 5A for one of the four plates, where the threshold lines (black lines) are drawn such as in Figures 2A and 4A. The compound samples exhibiting a read-out pair of (Inh,NI) above the upper line were classified as auto-fluorescent compounds (gray cross), while compound samples exhibiting a read-out pair of (Inh,NI) below the lower line were classified as quenching compounds (gray circles). Valid compound samples as well as positive and negative controls (black circles) lie in between the threshold lines. In this way, 1313 compounds were classified to be valid, 166 (10.8 %) to be quenching, and 57 (3.7%) to be auto-fluorescent.

Figure 5B plots the pairs (Inh, NI) from all four plates. The identification step was performed for each plate independently. In this way, 4966 valid (black circles), 819 quenching (13.3 %, gray circles), and 365 autofluorescent compounds (5.9 %, gray cross) were identified in this HTS run.

Since the inhibition of these auto-fluorescent and quenching compounds in a lot of cases pretends a positive inhibiting property of the according compound (compare Figure 5), this identification step avoids the detection of false positives and helps to save precious money and time in the drug discovery process when using HTS.

**Claims**

1. A method for identifying the impacts of interfering effects on secondary light emission data resulting from optical experiments on samples comprising

    i. providing data resulting from optical experiments on samples,
    ii. analyzing the data whether or not said data fulfill pre-selected criteria with respect to a pre-selected value and / or function of at least one identification parameter, which pre-selected value and /or function of the identification parameter is indicative for said effect, and

iii. identifying those data which are influenced by said interfering effects.

2. The method according to claim 1 wherein the data result from fluorescence measurements on fluorescent samples.

3. The method according to claim 2 wherein said effects result from unwanted auto-fluorescence of material present in the sample or fluorescence quenching.

4. The method according to one of claims 2 or 3 wherein the identification parameter is selected from the group consisting of a fluorescence intensity, a ratio of fluorescence intensities at selected wavelengths, a ratio of fluorescence intensities at different polarization directions, a fluorescence anisotropy, a fluorescence polarization, a fluorescence lifetime, a diffusion constant, a concentration of fluorophores, and a specific fluorescence brightness.

5. The method according to claim 1 wherein said pre-selected value and / or function of one identification parameter is pre-selected to a constant value and / or function or determined from a distribution of said identification parameters obtained from a set of optical experiments.

6. The method according to one of claims 1 to 5 further comprising the performance of a correction step on those data which have been identified as being influenced by said interfering effects.

7. The method according to claim 6 further comprising the performance of a control step on the corrected data to check whether or not the correction step has succeeded.

Figure 1

Figure 1

Figure 1

Figure 2

Figure 2

Figure 2

Figure 3

Figure 4

Figure5

European Patent
Office

**EUROPEAN SEARCH REPORT**

Application Number

EP 02 00 4899

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 07896 A (TROPIX INC) 1 February 2001 (2001-02-01) * page 20, line 3-10 * | 1,6 | G01N21/64 |
| A | GB 2 318 636 A (CAMBRIDGE IMAGING LTD) 29 April 1998 (1998-04-29) * page 1, paragraph 2 * * page 11, line 2-5 * * page 12, paragraph 6 - page 15, paragraph 1 * * page 18, paragraph 3 - page 19, paragraph 3 * | 1-7 | |
| A | US 5 733 721 A (RAO JIAN YU ET AL) 31 March 1998 (1998-03-31) * column 31, line 5 - column 32, line 11 * | 1-7 | |

**TECHNICAL FIELDS SEARCHED (Int.Cl.7)**

G01N

The present search report has been drawn up for all claims

| Place of search | Date of completion of the search | Examiner |
|---|---|---|
| MUNICH | 31 July 2002 | Hoogen, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 00 4899

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2002

| Patent document cited in search report | | Publication date | Patent family member(s) | | Publication date |
|---|---|---|---|---|---|
| WO 0107896 | A | 01-02-2001 | AU | 6227900 A | 13-02-2001 |
| | | | EP | 1221038 A1 | 10-07-2002 |
| | | | WO | 0107896 A1 | 01-02-2001 |
| GB 2318636 | A | 29-04-1998 | EP | 0937238 A1 | 25-08-1999 |
| | | | WO | 9815814 A1 | 16-04-1998 |
| US 5733721 | A | 31-03-1998 | US | 6194165 B1 | 27-02-2001 |
| | | | US | 5741648 A | 21-04-1998 |
| | | | US | 6372450 B1 | 16-04-2002 |
| | | | US | 5824495 A | 20-10-1998 |

EPO FORM P0459

For more details about this annex : see Official Journal of the European Patent Office, No. 12/82